# EUROPÄISCHE PATENTSCHRIFT

(11) **EP 1 328 721 B1**
(45) Veröffentlichungstag und Bekanntmachung des Hinweises auf die Patenterteilung: **29.12.2004**
(21) Anmeldenummer: 01986332.3
(22) Anmeldetag: 02.10.2001
(51) Int. Cl.: F02M 61/16, F02M 61/18, F02M 51/06

(54) **BRENNSTOFFEINSPRITZVENTIL**
FUEL-INJECTION VALVE
SOUPAPE D'INJECTION DE CARBURANT

(30) Priorität: 06.10.2000 DE 10049544
(43) Veröffentlichungstag der Anmeldung: 23.07.2003
(73) Patentinhaber: ROBERT BOSCH GMBH, 70442 Stuttgart (DE)
(72) Erfinder: DANTES, Guenter, 71735 Eberdingen (DE); NOWAK, Detlef, 74199 Untergruppenbach (DE)
(74) Vertreter: Körfer, Thomas, Dipl.-Phys.
(86) Internationale Anmeldenummer: PCT/DE2001/003787
(87) Internationale Veröffentlichungsnummer: WO 2002/029243

(56) Entgegenhaltungen:
- DE-A- 19 625 059
- DE-A- 19 812 092
- DE-A- 19 814 693
- US-A- 5 271 563

## Beschreibung

### Stand der Technik

Die Erfindung geht aus von einem Brennstoffeinspritzventil nach der Gattung des Hauptanspruchs.

Aus der DE 196 25 059 A1 ist ein Brennstoffeinspritzventil bekannt, welches in einem Strömungsweg des Brennstoffs von einem Brennstoffzulauf zu einer Abspritzöffnung mehrere Brennstoffkanäle aufweist, deren Querschnitt bei gegebenem Brennstoffdruck die jeweils pro Zeiteinheit abgespritzte Brennstoffmenge bestimmt. Um die Brennstoffverteilung in einer abgespritzten Brennstoffwolke zu beeinflussen, ist zumindest ein Teil der Brennstoffkanäle so ausgerichtet, daß die von ihnen austretenden Brennstoffstrahlen direkt durch die Abspritzöffnung gespritzt werden.

Nachteilig an dem aus der obengenannten Druckschrift bekannten Brennstoffeinspritzventil ist insbesondere, daß die Brennstoffkanäle in einer Ebene senkrecht zur Strömungsrichtung des Brennstoffs ansetzen, die Öffnungen also auf einer Kreislinie um eine mit dem Ventilsitzträger verbundene Ventilnadelführung angeordnet sind. Dadurch kann die das Brennstoffeinspritzventil durchfließende Brennstoffmenge bei Abheben des Ventilschließkörpers vom Dichtsitz nicht genau genug dosiert werden.

Ferner ist die Anzahl der Bohrungen nicht ausreichend, um eine hinreichend homogene Brennstoffwolke zu erzeugen, die den stöchiometrischen Anforderungen für eine vollständige Verbrennung genügt. Dies wird zusätzlich durch den großen Durchmesser der Brennstoffkanäle verstärkt.

Weiterhin ist aus der DE 198 12 092 A1 eine Kraftstoffeinspritzvorrichtung und ein damit ausgerüsteter Verbrennungsmotor bekannt. In der beschriebenen Vorrichtung wird eine Kraftstoffverwirbelungselement mit Schichtstruktur verwendet, durch welches das auf den Kraftstoff auf einer von einer Einspritzbohrung entfernten Seite eine starke Verwirbelungskraft und auf einer Seite in der Nähe der Kraftstoffeinspritzbohrung eine geringe Verwirbelungskraft ausgeübt wird. Dadurch kann ein komplexer, kegelförmiger Sprühstrahl erzeugt werden.

Nachteilig an der aus der DE 198 12 092 A1 bekannten Kraftstoffeinspritzvorrichtung ist dabei insbesondere die geringe Anzahl von Schichten des Verwirbelungselements, welche die Erzeugung einer homogenen Gemischwolke erschwert.

### Vorteile der Erfindung

Das erfindungsgemäße Brennstoffeinspritzventil mit den kennzeichnenden Merkmalen des Hauptanspruchs hat demgegenüber den Vorteil, daß die Einstellung des das Brennstoffeinspritzventil durchströmenden Brennstoffs durch die Anwendung des Schieberprinzips bei mehreren Reihen umfänglich angeordneter Brennstoffkanäle mit hoher Genauigkeit erfolgen kann. Dabei ist zumindest eine Reihe von Brennstoffkanälen oberhalb einer Führungslinie des Ventilschließkörpers angeordnet, während die restlichen Reihen unterhalb der Führungslinie ausgebildet sind.

Durch die in den Unteransprüchen aufgeführten Maßnahmen sind vorteilhafte Weiterentwicklungen des im Hauptanspruch angegebenen Brennstoffeinspritzventils möglich.

Von Vorteil ist auch, daß die von Reihe zu Reihe axial gegeneinander versetzten Brennstoffkanäle eine homogene Gemischwolke erzeugen.

Durch die Anordnung der Brennstoffkanäle mit einer tangentialen Komponente relativ zur Mittelachse des Brennstoffeinspritzventils erhält der Brennstoff einen Drall, welcher ebenfalls für eine gute Aufbereitung der Gemischwolke sorgt.

Die Brennstoffkanäle können gegenüber einer zur Mittelachse des Brennstoffeinspritzventils senkrechten Referenzebene in Abströmrichtung geneigt sein, wodurch die hydrodynamischen Eigenschaften der Brennstoffkanäle verbessert werden.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein Ausführungsbeispiel eines Brennstoffeinspritzventils gemäß dem Stand der Technik,
- Fig. 2: einen schematischen Ausschnitt durch ein erstes Ausführungsbeispiel des erfindungsgemäßen Brennstoffeinspritzventils im Bereich II in Fig. 1, und
- Fig. 3: einen schematischen Schnitt entlang der Linie III-III in Fig. 2.

### Beschreibung des Ausführungsbeispiels

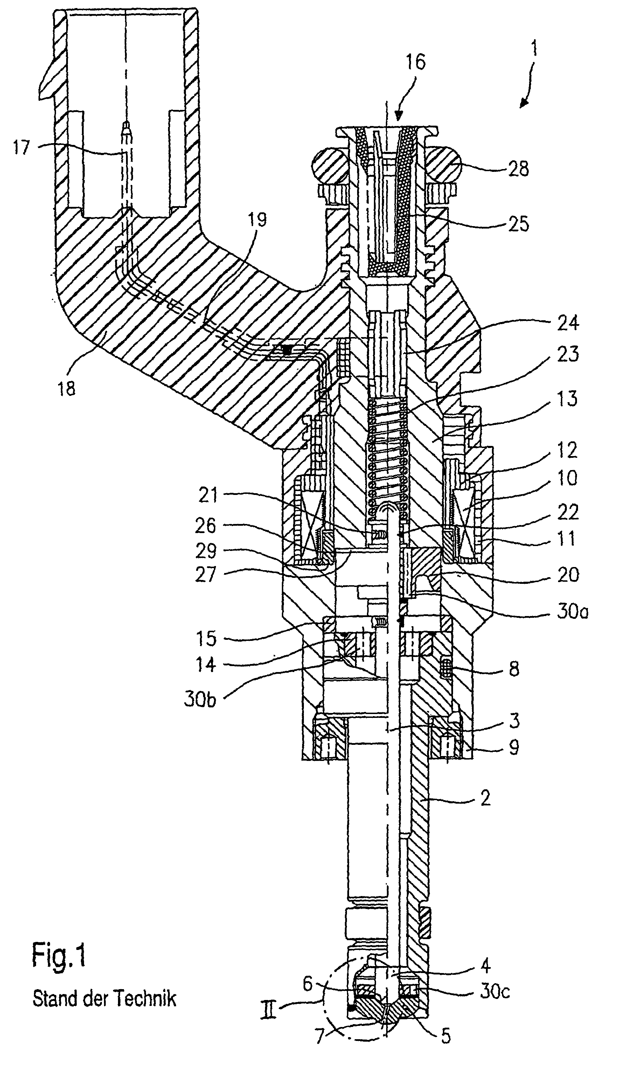

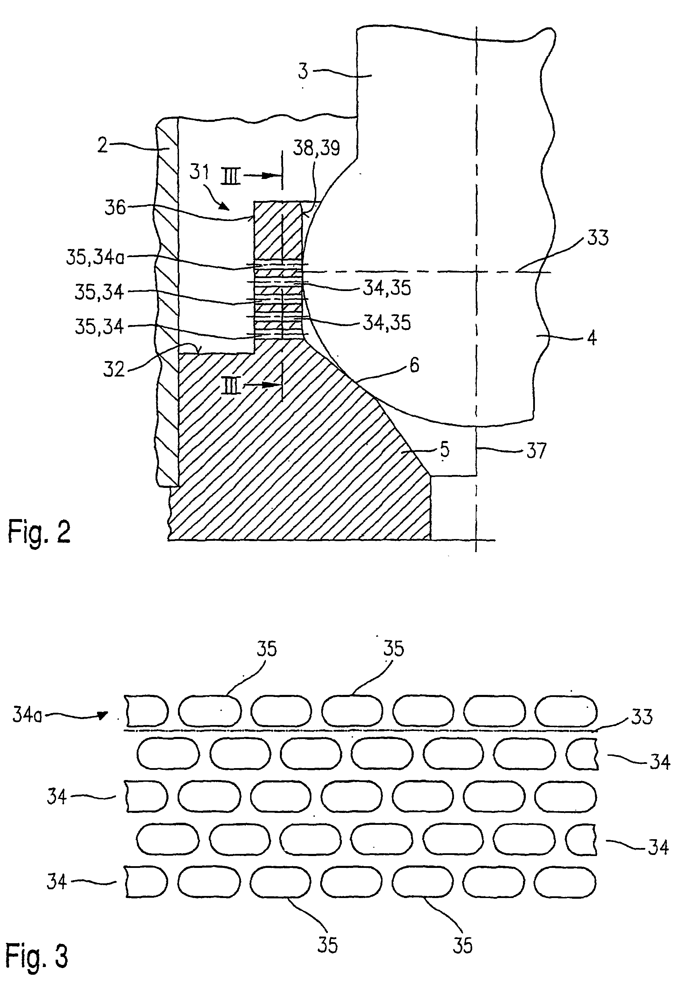

Bevor anhand der Figuren 2 und 3 ein Ausführungsbeispiel eines erfindungsgemäßen Brennstoffeinspritzventils 1 näher beschrieben wird, soll zum besseren Verständnis der Erfindung zunächst anhand von Fig. 1 ein bereits bekanntes, abgesehen von den erfindungsgemäßen Maßnahmen zu den Ausführungsbeispielen baugleiches Brennstoffeinspritzventil 1 bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist.

Die Ventilnadel 3 steht mit einem Ventilschließkörper 4 in Wirkverbindung, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt. Der Düsenkörper 2 ist durch eine Dichtung 8 gegen den Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Ein zweiter Flansch 31, welcher mit der Ventilnadel 3 über eine Schweißnaht 33 verbunden ist, dient als unterer Ankeranschlag. Ein elastischer Zwischenring 32, welcher auf dem zweiten Flansch 31 aufliegt, vermeidet Prellen beim Schließen des Brennstoffeinspritzventils 1.

In der Ventilnadelführung 14, im Anker 20 und am Ventilsitztkörper 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen eine nicht weiter dargestellte Brennstoffleitung abgedichtet.

Im Ruhezustand des Brennstoffeinspritzventils 1 wird der Anker 20 von der Rückstellfeder 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den Flansch 21, welcher mit der Ventilnadel 3 verschweißt ist, ebenfalls in Hubrichtung mit. Der mit der Ventilnadel 3 in Wirkverbindung stehende Ventilschließkörper 4 hebt von der Ventilsitzfläche 6 ab und der über die Brennstoffkanäle 30a bis 30c zur Abspritzöffnung 7 geführte Brennstoff wird abgespritzt.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilnadel 3 in Wirkverbindung stehende Flansch 21 entgegen der Hubrichtung bewegt. Die Ventilnadel 3 wird dadurch in die gleiche Richtung bewegt, wodurch der Ventilschließkörper 4 auf der Ventilsitzfläche 6 aufsetzt und das Brennstoffeinspritzventil 1 geschlossen wird.

Fig. 2 zeigt in einer auszugsweisen Schnittdarstellung ein Ausführungsbeispiel eines erfindungsgemäßen Brennstoffeinspritzventils 1. Der dargestellte Ausschnitt ist in Fig. 1 mit II bezeichnet.

Das in Fig. 2 darstellte Ausführungsbeispiel eines erfindungsgemäßen Brennstoffeinspritzventils 1 weist eine Ventilnadelführung 31 auf, welche an einer zulaufseitigen Stirnseite 32 des Ventilsitzkörpers 5 ausgebildet ist. Die Ventilnadelführung 31 kann dabei mit dem Ventilsitzkörper 5 einstückig ausgebildet sein oder beispielsweise durch Schweißen, Löten oder ähnliche Verfahren mit dem Ventilsitzkörper 5 verbunden sein. Die Ventilnadelführung 31 ist hohlzylindrisch ausgebildet.

Im vorliegenden Ausführungsbeispiel weist die Ventilnadel 3 einen kugelförmigen Ventilschließkörper 4 auf. Der Ventilschließkörper 4 bildet mit der auf dem Ventilsitzkörper 5 ausgebildeten Ventilsitzfläche 6 einen Dichtsitz. Der Ventilschließkörper 4 wird durch die Ventilnadelführung 31 geführt, wobei der Ventilschließkörper 4 mit einer Führungslinie 33 an einer Innenwandung 38 der Ventilnadelführung 31 anliegt. Im Bereich der Führungslinie 33 bzw. zwischen der Führungslinie 33 und dem Dichtsitz sind in der Ventilnadelführung 31 mehrere Reihen 34 von Brennstoffkanälen 35 angeordnet, welche sich von einer radial äußeren Seite 36 der Ventilnadelführung 31 zu einer radial inneren Seite 39 erstrecken. Von diesen ist im, vorliegenden Ausführungsbeispiel im Ruhezustand, in welchen der Ventilschließkörper 4 an der Ventilsitzfläche 6 anliegt, eine Reihe 34a zulaufseitig der Führungslinie 33 angeordnet, während die übrigen Reihen 34 zwischen der Führungslinie 33 und der Ventilsitzfläche 6 angeordnet sind.

Die Brennstoffkanäle 35 können dabei entweder senkrecht zu einer Mittelachse 37 des Brennstoffeinspritzventils 1 verlaufen oder unter einem Winkel α gegenüber der zur Mittelachse 37 senkrechten Ausrichtung in Abströmrichtung geneigt sein. Letzteres ist hydrodynamisch günstiger.

Sobald die Ventilnadel 3 durch Betätigung des Brennstoffeinspritzventils 1 entgegen der Strömungsrichtung des Brennstoffs bewegt wird, werden die Brennstoffkanäle 35 der Reihen 34 freigegeben. Brennstoff strömt von einer radial äußeren Seite 36 der Ventilnadelführung 31 durch die Brennstoffkanäle 35 in Richtung Dichtsitz. In der Anfangsphase des Öffnungsvorgangs werden nur die Brennstoffkanäle 35 derjenigen Reihen 34 freigegeben, welche abströmseitig der Führungslinie 33 des Ventilschließkörpers 4 angeordnet sind. Die Brennstoffkanäle 35 der obersten Reihe 34a, welche im Ruhezustand zulaufseitig der Führungslinie 33 des Ventilschließkörpers 4 angeordnet ist, bleiben zunächst noch geschlossen. Hat die Ventilnadel 3 einen festgelegten Teilhub durchlaufen, wird auch die oberste Reihe 34a zum Durchfluß freigegeben.

Durch diese zweiteilige räumliche Anordnung der Brennstoffkanäle 35 kann auf eine aufwendige Hubmodellierung der Ventilnadel 3 verzichtet werden, ohne die Zumeßgenauigkeit zu beeinträchtigen. Die Brennstoffkanäle 35 der Reihen 34 werden so angebracht, daß eine definierte Brennstoffmenge, welche etwas geringer ist als eine benötigte Brennstoffmenge, hindurchfließt. Durch die oberste Reihe 34a von Brennstoffkanälen 35 kann der Durchfluß bis zu einer exakten Brennstoffmenge durch Verändern des Öffnungsanschlags der Ventilnadel 3 variiert werden. Durch entsprechende Hubeinstellung der Ventilnadel 3 fließt genau so viel Brennstoff durch die oberste Reihe 34a von Brennstoffkanälen 35, wie dies im Rahmen der zu erzielenden Durchflußgenauigkeit notwendig ist.

Fig. 3 zeigt einen schematischen Schnitt entlang der Linie III-III in Fig. 2 durch die Ventilnadelführung 31 im Bereich der Brennstoffkanäle 35. Die Brennstoffkanäle 35 der Reihen 34 sind im dargestellten Ausführungsbeispiel axial zueinander versetzt angeordnet, um eine möglichst homogene Gemischwolke zu erzeugen. Die Brennstoffkanäle 35 können jedoch auch ohne axialen Versatz angeordnet sein. Um die erforderliche Zumeßgenauigkeit zu erreichen, sollten die Brennstoffkanäle 35 einen sehr kleinen Durchmesser, beispielsweise kleiner als 100 µm, insbesondere kleiner oder gleich 70 µm, aufweisen. Die Herstellung solcher kleinkalibrigen Bohrungen kann beispielsweise mittels Laserbearbeitung erfolgen.

Da die Brennstoffkanäle 35 zur Erzeugung eines Dralls eine tangentiale Komponente relativ zur Mittelachse 37 des Brennstoffeinspritzventils 1 aufweisen, erscheint der Querschnitt der Brennstoffkanäle 35 in Fig. 3 oval. Die Orientierung der tangentialen Komponenten der Brennstoffkanäle 35 kann dabei in jeder Reihe 34, 34a gleichsinnig relativ zu den übrigen Reihen 34, 34a sein. Das vorliegende Ausführungsbeispiel eines erfindungsgemäßen Brennstoffeinspritzventils 1 verbindet somit die Drallaufbereitung mit einer Verfeinerung der zugemessenen Brennstoffmenge.

Die Erfindung ist nicht auf das dargestellte Ausführungsbeispiel beschränkt und z. B. auch für Brennstoffeinspritzventile 1 mit piezoelektrischen und magnetostriktiven Aktoren oder beliebige Anordnungen von Brennstoffkanälen 35 anwendbar.

## Patentansprüche

1. Brennstoffeinspritzventil (1), insbesondere zum direkten Einspritzen von Brennstoff in einen Brennraum einer Brennkraftmaschine, mit einem Aktor (10) zur Betätigung einer Ventilnadel (3), wobei die Ventilnadel (3) an einem abspritzseitigen Ende einen Ventilschließkörper (4) aufweist, der zusammen mit einer Ventilsitzfläche (6), die an einem Ventilsitzkörper (5) ausgebildet ist, einen Dichtsitz bildet, und mit Brennstoffkanälen (35), die in einer mit dem Ventilsitzkörper (5) verbundenen oder einstückig ausgebildeten Ventilnadelführung (31) angeordnet sind,
wobei die Brennstoffkanäle (35) in mehreren Reihen (34, 34a) umfänglich in der Ventilnadelführung (31) angeordnet sind, und wobei mindestens eine Reihe (34a) von Brennstoffkanälen (35) im Ruhezustand des Brennstoffeinspritzventils (1) oberhalb einer Führungslinie (33) des Ventilschließkörpers (4) angeordnet ist,
**dadurch gekennzeichnet,**
**daß** die restlichen Reihen (34) von Brennstoffkanälen (35)abströmseitig der Führungslinie (33) des Ventilschließkörpers (4) angeordnet sind.

2. Brennstoffeinspritzventil nach Anspruch 1,
**dadurch gekennzeichnet,**
**daß** die restlichen Reihen (34) von Brennstoffkanälen (35) zwischen der Ventilsitzfläche (6) und der Führungslinie (33) des Ventilschließkörpers (4) angeordnet sind.

3. Brennstoffeinspritzventil nach Anspruch 1 oder 2,
**dadurch gekennzeichnet,**
**daß** die Ventilnadelführung (31) an einer zulaufseitigen Stirnseite (32) des Ventilsitzkörpers (5) ausgebildet ist.

4. Brennstoffeinspritzventil nach Anspruch 3,
**dadurch gekennzeichnet,**
**daß** die Ventilnadelführung (31) sich von der Stirnseite (32) des Ventilsitzkörpers (5) hohlzylindrisch erstreckt.

5. Brennstoffeinspritzventil nach Anspruch 4,
**dadurch gekennzeichnet,**
**daß** der Ventilschließkörper (4) so ausgeformt ist, daß er im Bereich der Führungslinie (33) an einer Innenwandung (38) der Ventilnadelführung (31) anliegt.

6. Brennstoffeinspritzventil nach einem der Ansprüche 1 bis 5,
**dadurch gekennzeichnet,**
**daß** die Brennstoffkanäle (35) der umfänglichen Reihen (34, 34a) axial gegeneinander versetzt angeordnet sind.

7. Brennstoffeinspritzventil nach einem der Ansprüche 1 bis 6,
**dadurch gekennzeichnet,**
**daß** die Brennstoffkanäle (35) eine Tangentialkomponente gegenüber einer Mittelachse (37) , des Brennstoffeinspritzventils (1) aufweisen.

8. Brennstoffeinspritzventil nach Anspruch 7,
**dadurch gekennzeichnet,**
**daß** die Tangentialkomponenten der Reihen (34, 34a) gleichsinnig orientiert sind.

9. Brennstoffeinspritzventil nach einem der Ansprüche 1 bis 8,
**dadurch gekennzeichnet,**
**daß** die Brennstoffkanäle (35) in einer Ebene senkrecht zur Mittelachse (37) des Brennstoffeinspritzventils (1) ausgebildet sind.

10. Brennstoffeinspritzventil nach Anspruch 9,
**dadurch gekennzeichnet,**
**daß** die Brennstoffkanäle (35) unter einem Winkel α gegenüber der zur Mittelachse (37) radialen Ausrichtung geneigt sind.

## Claims

1. Fuel injection valve (1), in particular for the direct injection of fuel into a combustion chamber of an internal combustion engine, having an actuator (10) for actuating a valve needle (3), the valve needle (3) having, at a spray-discharge end, a valve-closing body (4) which, together with a valve seat surface (6) which is formed on a valve seat body (5), forms a sealing seat, and having fuel ducts (35) which are arranged in a valve needle guide (31) which is connected or formed integrally with the valve seat body (5), with the fuel ducts (35) being arranged circumferentially in the valve needle guide (31) in a number of rows (34, 34a), and, in the rest state of the fuel injection valve (1), at least one row (34a) of fuel ducts (35) being arranged above a guide line (33) of the valve-closing body (4), **characterized in that** the remaining rows (34) of fuel ducts (35) are arranged on the downstream side of the guide line (33) of the valve-closing body (4).

2. Fuel injection valve according to Claim 1, **characterized in that** the remaining rows (34) of fuel ducts (35) are arranged between the valve seat surface (6) and the guide line (33) of the valve-closing body (4).

3. Fuel injection valve according to Claim 1 or 2, **characterized in that** the valve needle guide (31) is formed on an inlet end side (32) of the valve seat body (5).

4. Fuel injection valve according to Claim 3, **characterized in that** the valve needle guide (31) extends in the form of a hollow cylinder from the end side (32) of the valve seat body (5).

5. Fuel injection valve according to Claim 4, **characterized in that** the valve-closing body (4) is shaped in such a manner that, in the region of the guide line (33), it bears against an inner wall (38) of the valve needle guide (31).

6. Fuel injection valve according to one of Claims 1 to 5, **characterized in that** the fuel ducts (35) of the circumferential rows (34, 34a) are offset axially with respect to one another.

7. Fuel injection valve according to one of Claims 1 to 6, **characterized in that** the fuel ducts (35) have a tangential component with respect to a central axis (37) of the fuel injection valve (1).

8. Fuel injection valve according to Claim 7, **characterized in that** the tangential components of the rows (34, 34a) are orientated in the same direction.

9. Fuel injection valve according to one of Claims 1 to 8, **characterized in that** the fuel ducts (35) are formed in a plane perpendicular with respect to the central axis (37) of the fuel injection valve (1).

10. Fuel injection valve according to Claim 9, **characterized in that** the fuel ducts (35) are inclined at an angle α with respect to the orientation which is radial with respect to the central axis (37).

## Revendications

1. Injecteur de carburant (1), notamment pour l'injection directe de carburant dans une chambre de combustion d'un moteur à combustion interne, doté d'un actionneur (10) pour actionner une aiguille de soupape (3) présentant sur une extrémité côté injection un obturateur de soupape (4) qui forme un siège d'étanchéité conjointement avec une surface de contact (6) formée sur un corps de siège de soupape (5), et doté de canaux de carburant (35) disposés dans un guidage d'aiguille de soupape (31) conçu d'une seule pièce ou relié au corps de siège de soupape (5), les canaux de carburant (35) étant disposés sur plusieurs rangées (34, 34a) à la périphérie dans le guidage de l'aiguille de soupape (31), avec au moins une rangée (34a) de canaux de carburant (35) disposée à l'arrêt de l'injecteur de carburant (1) au-dessus d'une ligne de guidage (33) de l'obturateur de soupape (4),
**caractérisé en ce que**
les autres rangées (34) de canaux de carburant (35) sont disposées dans le sens d'écoulement de la ligne de guidage (33) de l'obturateur de soupape (4).

2. Injecteur de carburant selon la revendication 1,
**caractérisé en ce que**
les autres rangées (34) des canaux de carburant (35) sont disposées entre la surface de contact (6) et la ligne de guidage (33) de l'obturateur de soupape (4).

3. Injecteur de carburant selon la revendication 1 ou 2,
**caractérisé en ce que**
le guidage de l'aiguille de soupape (31) est formé sur une surface d'attaque (32) du corps du siège de soupape (5) côté entrée.

4. Injecteur de carburant selon la revendication 3,
**caractérisé en ce que**
le guidage de l'aiguille de soupape (31) s'étend à la manière d'un cylindre creux depuis la surface d'attaque (32) du corps de siège de soupape (5).

5. Injecteur de carburant selon la revendication 4,
**caractérisé en ce que**
l'obturateur de soupape (4) est formé de manière à reposer contre une paroi intérieure (38) du guidage de l'aiguille de soupape (31) dans la zone de la ligne de guidage (33).

6. Injecteur de carburant selon la revendication 4,
**caractérisé en ce que**
les canaux de carburant (35) des rangées périphériques (34, 34a) sont disposés décalés axialement les uns par rapport aux autres.

7. Injecteur de carburant selon l'une quelconque des revendications 1 à 6,
**caractérisé en ce que**
les canaux de carburant (35) présentent un composant tangentiel par rapport à un axe central (37) de l'injecteur de carburant (1).

8. Injecteur de carburant selon la revendication 7,
**caractérisé en ce que**
les composants tangentiels des rangées (34, 34a) sont orientés dans le même sens.

9. Injecteur de carburant selon l'une quelconque des revendications 1 à 8,
**caractérisé en ce que**
les canaux de carburant (35) sont conçus dans un plan perpendiculaire à l'axe central (37) de l'injecteur de carburant (1).

10. Injecteur de carburant selon la revendication 9,
**caractérisé en ce que**
les canaux de carburant (35) sont inclinés selon un angle α par rapport à la direction radiale de l'axe central (37).
